# EUROPÄISCHE PATENTSCHRIFT

(11) **EP 1 724 491 B1**
(45) Veröffentlichungstag und Bekanntmachung des Hinweises auf die Patenterteilung: **21.10.2009**
(21) Anmeldenummer: 06009185.7
(22) Anmeldetag: 04.05.2006
(51) Int. Cl.: F16F 9/32

(54) **Hydraulischer Stossdämpfer**
Hydraulic shock absorber
Amortisseur hydraulique

(30) Priorität: 19.05.2005 DE 102005022941
(43) Veröffentlichungstag der Anmeldung: 22.11.2006
(73) Patentinhaber: ThyssenKrupp Bilstein Suspension GmbH, 58256 Ennepetal (DE)
(72) Erfinder: Schmidt, Norbert, 65391 Lorch (DE); Schneider, Markus, Dr., 44625 Herne (DE)
(74) Vertreter: Döpp, Ludger

(56) Entgegenhaltungen:
- EP-A- 0 635 655
- DE-A1- 10 355 151
- DE-A1- 19 733 622

## Beschreibung

Die Erfindung betrifft einen hydraulischen Stoßdämpfer, der zumindest drei konzentrisch zueinander angeordnete Zylinderrohre beinhaltet.

Durch die US 5,353,898 A ist ein Schwingungsdämpfer mit veränderbarer Dämpfung bekannt geworden, bestehend aus einem Zylinder, einem an einer Kolbenstange befestigten Kolben, einer Kolbenstangendichtung, einer Anzahl von Kammern, die in Abhängigkeit von der Kolbenstellung miteinander verbunden sind, einer Absperrventilbaugruppe zwischen den Verbindungsstrecken der Kammern, wobei die Verbindungsstrecke aus einer Außenmantelfläche des Zylinders und einer Innenmantelfläche des Zwischenrohres gebildet wird, mindestens einer radialen Öffnung in dem Zwischenrohr, einem die Öffnung umfassenden Rohrstutzen, einer Anzahl von Rohrstutzen, die gleich der Anzahl der Absperrventilbaugruppen entspricht, einem Zwischenrohrlängenabschnitt und einem Führungsabschnitt an jeweils einem Ende des Zwischenrohrlängeabschnitts. Das Zwischenrohr weist in seinen Führungsabschnitten Dichtungsaufnahmesicken auf.

In der EP 0 905 408 A1 wird ein hydraulischer Stoßdämpfer beschrieben, beinhaltend zumindest einen inneren Zylinder, einen äußeren Zylinder, einen Kolben, eine Kolbenstange, eine Ölkanalvorrichtung sowie ein rohrförmiges Teil, das zwischen dem inneren und dem äußeren Zylinder angeordnete ist. Am äußeren Zylinder ist eine Dämpfungsvorrichtung angebracht, um den Fluss des Arbeitsöles durch die Ölkanalvorrichtung zu steuern.

Der EP 0 635 655 A1 ist ein hydraulischer Schwingungsdämpfer für Kraftfahrzeuge zu entnehmen, bestehend aus einem mit Dämpfungsflüssigkeit gefüllten Dämpferzylinder, in dem ein mit einer Kolbenstange verbundener, mit druckabhängigen Drosselventilen versehener Dämpfungskolben gleitet, der den Dämpferzylinder in zwei Arbeitsräume unterteilt, und bei dem zur Verstellung der Dämpfungskraft eine Bypass-Passage vorgesehen ist, deren Strömungsquerschnitt von einem außerhalb des Schwingungsdämpfers angeordneten, in einem rohrförmigen Ventilgehäuse untergebrachten Bypass-Ventilsystem steuerbar ist. Das Ventilgehäuse des Bypass-Ventilsystems ist mittels eines mindestens einen Durchlass für mindestens eine Strömungsverbindung zwischen dem Schwingungsdämpfer und dem Bypass-Ventilsystem aufweisenden, beidseitig konkav geformten Distanzteil am Mantelrohr des Schwingungsdämpfers befestigt.

Die beim Stand der Technik vorgeschlagene Anbindung der modulartig ausgebildeten Elemente am äußeren Zylinderrohr ist mit hohen Kosten verbunden und fertigungstechnisch sehr aufwändig. Darüber hinaus ist die in der US-A 5,353,898 vorgeschlagene Lösung mit hohem Umform- und Fertigungsaufwand verbunden.

Beim Stand der Technik werden teilweise Dichtelemente vorgeschlagen, die als Gummi-Metall-Elemente ausgebildet sind. Diese Elemente werden dadurch hergestellt, dass eine Gummiummantelung auf die Metallelemente aufvulkanisiert wird. Derartige Gummi-Metall-Elemente sind demzufolge teuer in der Herstellung.

Der Erfindung liegt die Aufgabe zugrunde, die vorstehend genannten Nachteile zu vermeiden und einen zumindest drei konzentrisch zueinander angeordnete Zylinder aufweisenden hydraulischen Stoßdämpfer bereitzustellen, bei welchem eine kostengünstige und konstruktiv einfache Lösung für die Anbindung eines Zusatzmoduls bereitgestellt wird.

Diese Aufgabe wird gelöst durch einen hydraulischen Stoßdämpfer, zumindest beinhaltend drei konzentrisch zueinander angeordnete Zylinderrohre, von denen zumindest das radial außen angeordnete Zylinderrohr zur Aufnahme mindestens eines Moduls mit einer zugehörigen Durchgangsöffnung versehen ist und das Modul über einen, zumindest mit einer Durchgangsbohrung versehenen Befestigungsflansch, der sich zumindest partiell auf der Außenwand des äußeren Zylinderrohres abstützt, mit dem äußeren Zylinderrohr verbunden ist, wobei konzentrisch zur Durchgangsbohrung des Befestigungsflansches mindestens eine im Wesentlichen zylindrisch ausgebildete Hülse vorgesehen ist, die eine Anlagefläche für mindestens ein Dichtelement bildet, das zumindest zwischen der äußeren Mantelfläche der Hülse und der konzentrisch zu dieser Mantelfläche angeordneten Innenwandung der Durchgangsbohrung des Befestigungsflansches dichtend geklemmt gehalten ist, wobei hülsenseitig zwischen der Innenwand des äußeren und der Außenwand des mittleren Zylinderrohrs ein mit einer Ausnehmung versehenes Distanzelement angeordnet ist, dergestalt, dass die jeweilige Ausnehmung des Distanzelements konzentrisch zur Durchgangsöffnung sowie zur Durchgangsbohrung und somit auch zur Hülse vorgesehen ist.

Vorteilhafte Weiterbildungen des Erfindungsgegenstandes sind den Unteransprüchen zu entnehmen.

Mit dem Erfindungsgegenstand werden eine Reihe von konstruktiven Ausführungsformen bereitgestellt, die sich vom Stand der Technik dadurch abheben, dass sie eine fertigungstechnisch einfache und somit kostengünstige Anbindung eines Zusatzmoduls am äußeren Zylinderrohr des hydraulischen Schwingungsdämpfers ermöglichen. Außerdem bieten alle Ausführungsformen eine große Montagefreundlichkeit, da die Montage einfach ist.

Sämtliche Ausgestaltungen des Erfindungsgegenstandes machen Gebrauch von mindestens einer Hülse sowie mindestens einem, vorteilhafterweise als O-Ring ausgebildeten, Dichtelement. Je nach Ausgestaltungsform des Erfindungsgegenstandes kann als Distanzelement entweder eine separate, mit einer Ausnehmung versehene Distanzscheibe zwischen dem äußeren und dem mittleren Zylinderrohr vorgesehen werden, die die Hülse, respektive das Dichtelement, umschließt. Alternativ kann auch das mittlere oder das äußere Zylinderrohr im Bereich der Hülse, unter Bildung eines entsprechenden Distanzelementes, umgeformt werden, und zwar in Richtung des jeweils anderen Zylinderrohres. Das jeweils zum Einsatz gelangende Distanzelement trägt zur Einhaltung eines vorgebbaren radialen Abstands zwischen dem äußeren und dem mittleren Zylinderrohr bei.

Anstelle des separaten oder integrierten Distanzelementes können auch andere Lösungsformen zur Abstandeinhaltung der beiden Zylinderrohre gegeben sein. Beispielsweise kann das Dichtelement in entsprechenden Ausnehmungen des mittleren sowie äußeren Zylinderrohres eingebracht werden. Bedarfsweise können hier auch metallische Verstärkungselemente oder dergleichen eingebracht werden.

Der Fachmann wird, je nach Anwendungsfall, die geeignete Lösung vorsehen.

Der Erfindungsgegenstand ist anhand eines Ausführungsbeispiels in der Zeichnung dargestellt und wird wie folgt beschrieben. Es zeigen:

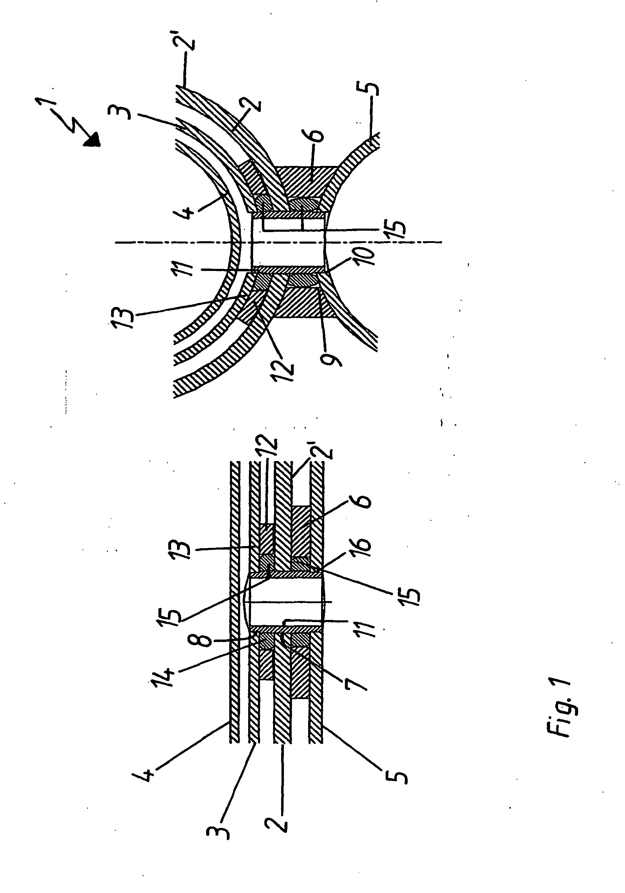

- Figuren 1 bis 5: Unterschiedliche Ausgestaltungsformen des Erfindungsgegenstandes in verschiedenen Ansichten bzw. Schnitten.

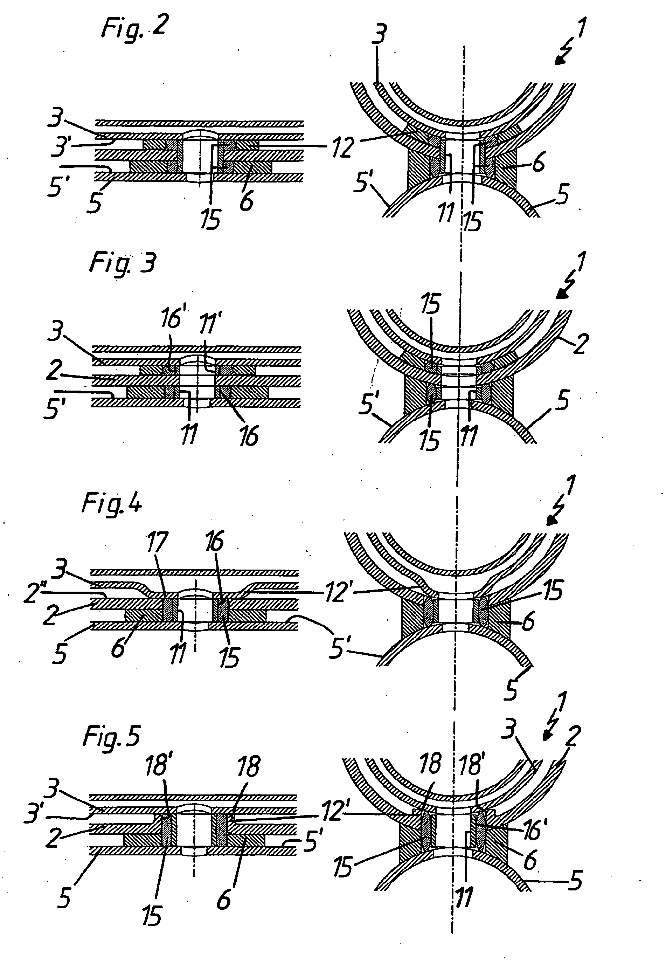

In den Figuren 1 bis 5 sind Teilbereiche hydraulischer Stoßdämpfer 1 in verschiedenen Ansichten bzw. Schnitten dargestellt, wobei die Figuren 1 bis 3 einen ähnlichen konstruktiven Aufbau haben und die Figuren 4 und 5 davon konstruktiv abweichen. Soweit sinnvoll werden für gleiche Bauteile gleiche Bezugszeichen verwendet. Zum konstruktiven Aufbau der nach dem Zweikammerwirkprinzip arbeitenden hydraulischen Stoßdämpfer 1, die drei konzentrisch zueinander angeordnete Zylinderrohre 2,3,4 aufweisen, bei denen an das äußere Zylinderrohr 2 ein Zusatzmodul 5 angeflanscht ist, wird auf den eingangsseitig beschriebenen Stand der Technik verwiesen. In den Ausführungsbeispielen gemäß Figuren 1 bis 5 wird lediglich die Anbindung des Moduls 5 an den hydraulischen Stoßdämpfer 1 dargestellt und beschrieben.

Im Folgenden werden zunächst die Ausführungsformen der Figuren 1 bis 3 behandelt, da ihnen die meisten übereinstimmenden Merkmale zuzuordnen sind. Das Modul 5 ist über einen Befestigungsflansch 6, der sich auf der Außenwand 2' des äußeren Zylinderrohres 2 abstützt, mit diesem verbunden. Vorzugsweise ist der Befestigungsflansch 6 an dem äußeren Zylinderrohr 2 und/oder an dem Modul 5 angeschweißt, beispielsweise durch das KE-Schweißen, welches bereits serienerprobt ist. Sowohl das äußere Zylinderrohr 2 als auch das mittlere Zylinderrohr 3 sind mit fluchtenden Durchgangsöffnungen 7,8 versehen. In gleicher Weise beinhalten auch der Befestigungsflansch 6 sowie das Modul 5 jeweils eine Durchgangsbohrung 9,10. Die Durchgangsöffnungen 7,8, respektive die Durchgangsbohrungen 9,10, weisen gleichartige Durchmesser auf und dienen zur Aufnahme einer Hülse 11 (Figur 1). Zwischen dem äußeren 2 und dem mittleren Zylinderrohr 3 erstreckt sich ein, in diesem Beispiel scheibenartig (ringabschnittsartig) ausgebildetes Distanzelement 12.

In Figur 1 ist die Hülse 11 an ihrer dem mittleren Zylinderrohr 3 zugewandten Stirnseite mit einem radialen Absatz 13 versehen, der eine Aufnahmekehle für das mittlere Zylinderrohr 3 des hydraulischen Stoßdämpfers 1 bildet. Auf diese Weise stützt sich die Hülse 11 über den radialen Absatz 13 am mittleren Zylinderrohr 3 ab und ist fixiert. Das Distanzelement 12 ist mit einer Ausnehmung 14 versehen und umschließt die Hülse 11 mit radialem Abstand. Die Durchgangsöffnungen 7,8, die Durchgangsbohrungen 9,10 und die Ausnehmung 14 sind somit konzentrisch zur Hülse 11 vorgesehen. Im Ausführungsbeispiel gemäß Figur 1 sind zwei als O-Ringe ausgebildete Dichtelemente 15 vorgesehen. Ein erster äußerer O-Ring 15 ist zwischen dem Befestigungsflansch 6 und der äußeren Mantelfläche 16 der Hülse 11 angeordnet. Dieser äußere O-Ring 15 wird im Einbauzustand dichtend geklemmt zwischen allen vier diesen O-Ring umgebenden Wandabschnitten gehalten. Ein zweiter innerer O-Ring 15 ist zwischen dem äußeren 2 und dem mittleren Zylinderrohr 3 des hydraulischen Stoßdämpfers 1 und dem Distanzelement 12, respektive der Hülse 11 angeordnet. Auch hier bildet die Mantelfläche 16 der Hülse 11 eine erste Anlagefläche für den O-Ring 15, während die Innenwandung der Ausnehmung 14 des Distanzelementes 12 eine zweite Anlagefläche für diesen O-Ring 15 bildet. Im eingebauten Zustand liegt der zweite O-Ring ebenfalls dichtend an den entsprechenden den O-Ring 15 umgebenden Wandabschnitten des äußeren 2 und des mittleren Zylinderrohres 3 des hydraulischen Stoßdämpfers 1 an.

Die in Figur 1 dargestellte Ausführungsform der Erfindung ist konstruktiv besonders einfach aufgebaut, da bei dieser Ausführungsform keine Umformung der konzentrisch zueinander angeordneten Zylinderrohre 2,3,4 vorgenommen werden muss. Die hier dargestellte dichtende Anbindung des Moduls 5 an das äußere Zylinderrohr 2 kommt mit einer geringen Teileanzahl aus, die darüber hinaus konstruktiv einfach gestaltet und somit besonders kostengünstig hergestellt werden können.

Die Ausführungsform gemäß Figur 2 ist derjenigen in Figur 1 dargestellten sehr ähnlich. Auch hier sind der Befestigungsflansch 6 und das Distanzelement 12 in gleicher Weise angeordnet. Ebenfalls ist eine Hülse 11 vorgesehen. Die Hülse 11 ist abweichend zu derjenigen in Figur 1 nicht mit einem radialen Absatz versehen, sondern vollständig eben ausgebildet und stützt sich einerseits auf der Außenwand 3' des mittleren Zylinderrohres 3 und andererseits an der äußeren Umfangsfläche 5' des Moduls 5 ab. Die als O-Ringe ausgebildeten Dichtelemente 15 sind in gleicher Weise, wie bereits in Figur 1 beschrieben, angeordnet und stützen sich an den gleichen Bauteilen ab.

Bei der Ausführungsform gemäß Figur 3 ist der Hauptunterschied zu den Figuren 1 und 2 darin zu sehen, dass keine einteilige Hülse mehr eingesetzt wird, sondern vielmehr zwei, in deren axialer Richtung gesehen, hintereinander angeordnete Hülsen 11,11' vorgesehen sind, wobei die erste (äußere) Hülse 11 zwischen der äußeren Umfangsfläche 5' des Moduls 5 und dem äußeren Zylinderrohr 2 des hydraulischen Stoßdämpfers 1 und die zweite Hülse 11' zwischen dem äußeren Zylinderrohr 2 und dem mittleren Zylinderrohr 3 des hydraulischen Stoßdämpfers 1 angeordnet ist. Die jeweiligen Mantelflächen 16 bzw. 16' der Hülsen 11 bzw. 11' bilden wiederum eine Anlagefläche für das jeweilige, auch in diesem Beispiel als O-Ring ausgebildete Dichtelement 15.

Allen Ausführungsformen, die in den Figuren 1 bis 3 dargestellt sind, ist vorteilhaft gemeinsam, dass alle drei konzentrisch zueinander angeordneten Zylinderrohre 2,3,4 des hydraulischen Stoßdämpfers 1 unverformt bleiben können, so dass die Anbindung des Moduls 5 fertigungstechnisch einfach und somit kostengünstig vorgenommen werden kann.

Das Modul 5 kann in ähnlicher Weise wie im Stand der Technik ausgebildet sein oder aber aktive Verstellsysteme, wie Dämpfungsventile, vorzugsweise schalt- oder regelbar, umfassen.

Die Figuren 4 und 5 machen mit Ausnahme des separaten Distanzelementes von gleichen Bauteilen, wie in den Figuren 1 bis 3 beschrieben, Gebrauch, so dass auch hier gleiche Bezugszeichen gelten.

Bei der in Figur 4 dargestellten Ausführungsform ist wiederum nur eine Hülse 11 vorgesehen. Zur Bildung eines Distanzelementes 12' ist der hülsenseitige Bereich des mittleren Zylinderrohres 3 umformtechnisch in Richtung der Innenwand 2" des äußeren Zylinderrohres 2 verformt und liegt an der Innwand 2" an. Die Hülse 11 erstreckt sich in diesem Beispiel zwischen der äußeren Umfangsfläche 5' des Moduls 5 und dem abgebogenen Bereich 17 (Ausbauchung) des mittleren Zylinderrohrs 3, welcher das Distanzelement 12' bildet. Ein als O-Ring ausgebildetes Dichtelement 15 erstreckt sich zwischen der äußeren Mantelfläche 16 der Hülse 11 und den umgebenden Bauteilen 2,3,5,6 und liegt dichtend unter entsprechender Vorspannung an den zugehörigen Wandabschnitten dieser Bauteile 2,3,5,6 und der äußeren Mantelfläche 16 der Hülse 11 an. Vorteilhaft an dieser Ausführungsform ist, dass gegenüber den Ausführungsformen gemäß Figuren 1 bis 3 sowohl auf ein separates Distanzelement als auch auf einen zweiten O-Ring verzichtet werden kann. Auch wenn die Herstellung dieser Ausbauchung 17 einen zusätzlichen Umformschritt des mittleren Zylinderrohres 3 bedeutet, kann sie, in Abhängigkeit vom Anwendungsfall, eine sinnvolle Alternative zu den bereits abgehandelten Ausführungsformen bilden.

In der Ausführungsform gemäß Figur 5 ist nicht das mittlere 3, sondern das äußere Zylinderrohr 2 des hydraulischen Stoßdämpfers 1 mit einer radial nach innen gerichteten, umformtechnisch erzeugten Auskragung 18 versehen, die in diesem Beispiel das Distanzelement 12' bildet. Analog der Ausbauchung 17 gemäß Figur 4 macht die radial nach innen gerichtete Auskragung 18 gemäß Figur 5 ein Distanzelement zwischen dem mittleren 3 und dem äußeren Zylinderrohr 2 des hydraulischen Stoßdämpfers 1 überflüssig. Die Hülse 11 erstreckt sich zwischen der äußeren Umfangsfläche 5' des Moduls 5 und der äußeren Umfangsfläche 3' des mittleren Zylinderrohres 3. Die Innenwandung 18' der Auskragung 18 bildet zumindest partiell eine Anlagefläche für das einzelne als O-Ring ausgebildete Dichtelement 15. Auch in Figur 5 bildet die äußere Mantelfläche 16 der Hülse 11 die innere Anlagefläche für den O-Ring 15.

Analog zur Ausführungsform gemäß Figur 4 ist bei der Ausführungsform gemäß Figur 5 als Vorteil zu nennen, dass zusätzlich zu dem Befestigungsflansch 6 für eine dichtende Anbindung des Moduls 5 an das äußere Zylinderrohr 2 des hydraulischen Stoßdämpfers 1 lediglich zwei weitere Bauteile, nämlich die Hülse 11 und ein einzelner O-Ring 15, benötigt werden.

Ergänzend zu den bereits genannten Vorteilen der jeweiligen Ausführungsformen gemäß Figuren 1 bis 5 sei noch erwähnt, dass alle beschriebenen Ausführungsformen der Erfindung den gemeinsamen Vorteil aufweisen, dass sie gegenüber dem Stand der Technik eine montagefreundliche Lösung für die Anbindung des Moduls 5 an das äußere Zylinderrohr 2 des hydraulischen Stoßdämpfers 1 darstellen. Die bei den jeweiligen Ausführungsformen zum Einsatz gelangenden Bauteile können ohne Schwierigkeiten eingesetzt und montiert werden, so dass die Stoßdämpfermontage auf einfache Weise möglich ist.

### Bezugszeichenliste

- 1: hydraulischer Stoßdämpfer
- 2: Zylinderrohr
- 2': Außenwand
- 2": Innenwand
- 3: Zylinderrohr
- 3': Außenwand
- 4: Zylinderrohr
- 5: Modul
- 5': äußere Umfangsfläche
- 6: Befestigungsflansch
- 7: Durchgangsöffnung
- 8: Durchgangsöffnung
- 9: Durchgangsbohrung
- 10: Durchgangsbohrung
- 11: Hülse
- 11': Hülse
- 12: Distanzelement
- 12': Distanzelement
- 13: radialer Absatz
- 14: Ausnehmung
- 15: Dichtelement
- 16: äußere Mantelfläche
- 16': äußere Mantelfläche
- 17: Ausbauchung
- 18: Auskragung
- 18': Innenwandung

## Patentansprüche

1. Hydraulischer Stoßdämpfer, zumindest beinhaltend drei konzentrisch zueinander angeordnete Zylinderrohre (2,3,4), von denen zumindest das radial außen angeordnete Zylinderrohr (2) zur Aufnahme mindestens eines Moduls (5) mit einer zugehörigen Durchgangsöffnung (7) versehen ist und das Modul (5) über einen, zumindest mit einer Durchgangsbohrung (9) versehenen Befestigungsflansch (6), der sich zumindest partiell auf der Außenwand (2') des äußeren Zylinderrohres (2) abstützt, mit dem äußeren Zylinderrohr (2) verbunden ist, wobei konzentrisch zur Durchgangsbohrung (9) des Befestigungsflansches (6) mindestens eine im Wesentlichen zylindrisch ausgebildete Hülse (11,11') vorgesehen ist, die eine Anlagefläche für mindestens ein Dichtelement (15) bildet, das zumindest zwischen der äußeren Mantelfläche (16,16') der Hülse (11,11') und der konzentrisch zu dieser Mantelfläche (16,16') angeordneten Innenwandung der Durchgangsbohrung (9) des Befestigungsflansches (6) dichtend geklemmt gehalten ist, wobei hülsenseitig zwischen der Innenwand (2") des äußeren (2) und der Außenwand (3') des mittleren Zylinderrohrs (3) ein mit einer Ausnehmung (14) versehenes Distanzelement (12) angeordnet ist, dergestalt, dass die jeweilige Ausnehmung (14) des Distanzelements (12) konzentrisch zur Durchgangsöffnung (7) sowie zur Durchgangsbohrung (9) und somit auch zur Hülse (11,11') vorgesehen ist.

2. Stoßdämpfer nach Anspruch 1, **dadurch gekennzeichnet, dass** die Hülse (11,11') im Bereich der Außenwand (3') des mittleren Zylinderrohrs (3) mit einem radialen Absatz (13) versehen ist, der eine Aufnahmekehle für das mittlere Zylinderrohr (3) bildet.

3. Stoßdämpfer nach Anspruch 1 oder 2, **dadurch gekennzeichnet, dass** mindestens zwei als O-Ringe ausgebildete Dichtelemente (15) vorgesehen sind, von denen der erste O-Ring zwischen dem Befestigungsflansch (6) und der Mantelfläche (16) der Hülse (11) und der zweite O-Ring zwischen dem äußeren (2) und dem mittleren Zylinderrohr (3), respektive dem Distanzelement (12) und der Hülse (11) angeordnet ist.

4. Stoßdämpfer nach einem der Ansprüche 1 bis 3, **dadurch gekennzeichnet, dass** sowohl die innere als auch die äußere Mantelfläche (16) der Hülse (11) eben ausgebildet ist, dass sich die eine Stirnfläche der Hülse (11) auf der Außenwand (3') des mittleren Zylinderrohres (3), und dass sich die andere Stirnfläche an einer mit dem Befestigungsflansch (6) in Wirkverbindung stehenden äußeren Umfangsfläche (5') des Moduls (5) abstützt.

5. Stoßdämpfer nach einem der Ansprüche 1 bis 4, **gekennzeichnet durch** mehrere axial kurz bauende Hülsen (11,11'), die sich einerseits zwischen der Außenwand (3') des mittleren (3) und der Innenwand (2") des äußeren Zylinderrohres (2) und andererseits zwischen der Außenwand (2') des äußeren Zylinderrohres (2) und der äußeren Umfangsfläche (5') des Moduls (5) abstützen.

6. Stoßdämpfer nach einem Anspruch 5, **dadurch gekennzeichnet, dass** zwischen einer jeden Hülse (11,11') und einerseits dem Distanzelement (12) und andererseits dem Befestigungsflansch (6) jeweils mindestens ein Dichtelement (15), insbesondere ein O-Ring, angeordnet ist.

7. Stoßdämpfer nach einem der Ansprüche 1 bis 6, **dadurch gekennzeichnet, dass** zur Bildung eines Distanzelementes (12') im Bereich der jeweiligen Durchgangsöffnung (7,8) der Zylinderrohre (2,3) ein Teilbereich des mittleren Zylinderrohres (3) in Richtung des äußeren Zylinderrohres (2) bzw. ein Teilbereich des äußeren Zylinderrohres (2) in Richtung des mittleren Zylinderrohres (3), unter Bildung einer Ausbauchung (17) bzw. einer Auskragung (18) abgebogen ist.

8. Stoßdämpfer nach einem der Ansprüche 1 bis 7, **dadurch gekennzeichnet, dass** sich das Dichtelement (15) im Wesentlichen über die axiale Länge der Hülse (11,11') erstreckt.

9. Stoßdämpfer nach den Ansprüchen 7 bis 8, **dadurch gekennzeichnet, dass** sich das Dichtelement (15) einerseits zwischen Hülse (11) und äußerem Zylinderrohr (2)/Befestigungsflansch (6) und andererseits zwischen der äußeren Umfangsfläche (5') des Moduls (5) und dem durch Umformung erzeugten Bereich (17,18) des Distanzelementes (12') erstreckt.

## Claims

1. A hydraulic shock absorber, at least comprising three cylinder tubes (2, 3, 4) arranged concentrically to each other, of which at least the radially outside located cylinder tube (2) is provided with an associated through hole (7) for receiving at least one module (5) and the module (5) is connected to the outer cylinder tube (2) by means of a fixing flange (6) provided with at least one through bore (9), which flange rests at least partially on the outer wall (2') of the outer cylinder tube (2), wherein at least one essentially cylindrical sleeve (11, 11') is provided concentrically with respect to the through bore (9) of the fixing flange (6), which sleeve forms a bearing surface of at least one seal element (15) that is maintained in a sealing clamped manner at least between the outer surface area (16, 16') of the sleeve (11, 11') and the inner wall of the through bore (9) of the fixing flange (6), which inner wall is concentrically arranged with respect to said surface area (16, 16'), wherein on the side of the sleeve a distance element (12) provided with a recess (14) is placed between the inner wall (2") of the outer tube (2) and the outer wall (3') of the intermediate cylinder tube (3), such that the respective recess (14) of the distance element (12) is provided concentrically with respect to the through hole (7) as well as the through bore (9) and thus also with respect to the sleeve (11, 11').

2. A shock absorber according to claim 1, **characterized in that** the sleeve (11, 11') is provided with a radial shoulder (13) in the area of the outer wall (3') of the intermediate cylinder tube (3), which shoulder forms a reception groove for the intermediate cylinder tube (3).

3. A shock absorber according to claim 1 or 2, **characterized in that** at least two seal elements (15) formed as O-rings are provided, of which the first O-ring is placed between the fixing flange (6) and the surface area (16) of the sleeve (11) and the second O-ring is placed between the outer (2) and the intermediate cylinder tube (3) respectively the distance element (12) and the sleeve (11).

4. A shock absorber according to one of the claims 1 through 3, **characterized in that** both the inner and outer surface area (16) of the sleeve (11) are flat, that the one face of the sleeve (11) rests upon the outer wall (3') of the intermediate cylinder tube (3) and the other face rests against an outer circumferential surface (5') of the module (5), which surface is in active relation with the fixing flange (6).

5. A shock absorber according to one of the claims 1 through 4, **characterized by** several sleeves (11, 11') of small axial dimension that rest between the outer wall (3') of the intermediate tube (3) and the inner wall (2") of the outer cylinder tube (2) on the one hand and between the outer wall (2') of the outer cylinder tube (2) and the outer circumferential surface (5') of the module (5) on the other hand.

6. A shock absorber according to claim 5, **characterized in that** respectively at least one seal element (15), in particular an O-ring, is placed between each sleeve (11, 11') and the distance element (12) on the one hand and the fixing flange (6) on the other hand.

7. A shock absorber according to one of the claims 1 through 6, **characterized in that,** in the region of the respective through hole (7, 8) of the cylinder tubes (2, 3), a partial portion of the intermediate cylinder tube (3) is bent into the direction of the outer cylinder tube or a partial portion of the outer cylinder tube (3) is bent into the direction of the intermediate cylinder tube (3) while forming a bulge (17) or a collar (18), for forming a distance element (12').

8. A shock absorber according to one of the claims 1 through 7, **characterized in that** the seal element (15) essentially extends over the axial length of the sleeve (11, 11').

9. A shock absorber according to claims 7 through 8, **characterized in that** the seal element (15) extends between the sleeve (11) and the outer cylinder tube (2)/fixing flange (6) on the one hand and between the outer circumferential surface (5') of the module (5) and the portion (17, 18) of the distance element (12') that has been created by forming on the other hand.

## Revendications

1. Amortisseur hydraulique, comprenant au moins trois tuyaux de cylindre (2, 3, 4) disposés concentriquement l'un par rapport à l'autre, dont au moins le tuyau de cylindre (2) disposé radialement à l'extérieur est muni d'un trou de passage (7) associé pour recevoir au moins un module (5) et le module (5) est relié au tuyau de cylindre extérieur (2) par moyen d'une bride d'attache (6) munie d'au moins un forage de passage (9) laquelle s'appuie au moins partiellement sur la paroi extérieure (2') du tuyau de cylindre extérieur (2), au moins un manchon essentiellement cylindrique étant prévu concentriquement par rapport au forage de passage (9) de la bride d'attache (6), le dit manchon formant une surface d'appui d'au moins un élément d'étanchéité (15) qui est retenu de manière serrée et étanche au moins entre la surface latérale extérieure (16, 16') du manchon (11, 11') et la paroi intérieure du forage de passage (9) de la bride d'attache (6), la paroi intérieure étant disposée de manière concentrique par rapport à la surface latérale (16, 16'), et du côté du manchon, un élément de distance (12) muni d'un évidement (14) étant disposé entre la paroi intérieure (2") du tuyau extérieur (2) et la paroi extérieure (3') du tuyau de cylindre intermédiaire (3), de sorte que l'évidement respectif (14) de l'élément de distance (12) est prévu concentriquement par rapport au trou de passage (7) ainsi qu'au forage de passage (9) et ainsi par rapport au manchon (11, 11') aussi.

2. Amortisseur selon la revendication 1, **caractérisé en ce que** le manchon (11, 11') est muni d'un épaulement radial (13) au niveau de la paroi extérieure (3') du tuyau de cylindre intermédiaire (3), l'épaulement formant une gorge de réception du tuyau de cylindre intermédiaire (3).

3. Amortisseur selon la revendication 1 ou 2, **caractérisé en ce qu'**au moins deux éléments d'étanchéité (15) formés comme des anneaux toriques sont prévus, dont le premier anneau torique est disposé entre la bride d'attache (6) et la surface latérale (16) du manchon (11) et le deuxième anneau torique est disposé entre le tuyau extérieur (2) et le tuyau de cylindre intermédiaire (3), respectivement entre l'élément de distance (12) et le manchon (11).

4. Amortisseur selon l'une des revendications 1 à 3, **caractérisé en ce que** et la surface latérale intérieure et la surface latérale extérieure (16) du manchon (11) sont plates, et que l'une face du manchon (11 s'appuie sur la paroi extérieure (3') du tuyau de cylindre intermédiaire (3) et que l'autre face s'appuie contre une surface circonférentielle extérieure (5') du module (5) laquelle est activement reliée à la bride d'attache (6).

5. Amortisseur selon l'une des revendications 1 à 4, **caractérisé par** plusieurs manchons (11, 11') de faible dimension axiale qui s'appuient entre la paroi extérieure (3') du tuyau de cylindre intermédiaire (3) et la paroi intérieure (2") du tuyau de cylindre extérieur (2) d'une part et entre la paroi extérieure (2') du tuyau de cylindre extérieur (2) et la surface circonférentielle extérieure (5') du module (5) d'autre part.

6. Amortisseur selon la revendication 5, **caractérisé en ce que** respectivement au moins un élément d'étanchéité (15), notamment un anneau torique, est disposé entre chaque manchon (11, 11') et l'élément de distance (12) d'une part et la bride d'attache (6) d'autre part.

7. Amortisseur selon l'une des revendications 1 à 6, **caractérisé en ce qu'**une partie partielle du tuyau de cylindre intermédiaire (3) est courbée dans la direction du tuyau de cylindre extérieur (2) ou une partie partielle du tuyau de cylindre extérieur (2) est courbée dans la direction du tuyau de cylindre intermédiaire (3) au niveau du trou de passage (7, 8) respectif des tuyaux de cylindre (2, 3) en formant un évasement (17) ou un collet (18) pour former un élément de distance (12').

8. Amortisseur selon l'une des revendications 1 à 7, **caractérisé en ce que** l'élément d'étanchéité (15) s'étend essentiellement sur la longueur axiale du manchon (11, 11').

9. Amortisseur selon les revendications 7 à 8, **caractérisé en ce que** l'élément d'étanchéité (15) s'étend entre le manchon (11) et le tuyau de cylindre extérieur (2)/la bride d'attache (6) d'une part et entre la surface circonférentielle extérieure (5') du module (5) et la partie créée (17, 18) par formage de l'élément de distance (12') d'autre part.
